# EUROPEAN PATENT APPLICATION

(11) **EP 1 036 506 A2**
(43) Date of publication of application: **20.09.2000**
(21) Application number: 00302026.0
(22) Date of filing: 14.03.2000
(51) Int. Cl.: A23G 9/02

(54) **Frozen dessert with oil-in-water coating**

(30) Priority: 15.03.1999 JP 6779499
(71) Applicant: Sunaroma Co., Ltd., Settsu-shi, Osaka (JP)
(72) Inventor: Komuro, Yasunori, Settsu-shi, Osaka (JP)
(74) Representative: Benson, John Everett

(57) **Abstract**

This invention offers a combined frozen dessert where there is no oily feel but is abundant in fresh feel and the surface is flat and the finish of the appearance is beautiful; and, in a combined frozen dessert where the frozen dessert which is to be a core is coated with a coating agent of an oil-in-water type, the said coating agent contains 30-80% by weight of water, 1-40% by weight of fat/oil and 0-15% by weight of solid not fat (SNF), contains saccharide and thickening polysaccharide as main ingredients and further contains 0.1-1% by weight of a hydrophilic sucrose fatty acid ester having an HLB of 9 or more.

## Description

The present invention relates to a combined frozen dessert where a frozen dessert which is to be a core is dipped in a bath of a coating agent whereby a coating treatment is carried out.

In a frozen dessert of an ice bar type, there are such a one which is coated with a coating agent of an oil base type represented by a chocolate coating agent and such a one which is coated with a coating agent of a sherbet material as disclosed in the Japanese Laid-Open Patent Hei-03/224447. In both of them, frozen dessert which is to be a frozen core is dipped in a bath of a coating agent whereby a coating treatment is carried out.

There is another type where a filling agent is filled in a shell previously formed using a coating agent and is frozen whereby a coating treatment is carried out.

However, when a coating is carried out using a coating agent of an oil base type, an oily taste remains in the mouth lacking in a fresh feel. In addition, the product is in high calories in terms of nutrition and there is a disadvantage that such a product is not favored by the people who are worrying about obesity.

When a coating is carried out using a coating agent of a sherbet material, there are disadvantages that ice crystals of the coating agent after freezing become rough resulting in a feel on eating of chipped ice and that adhered amount of the coating agent is not constant resulting in a randomly uneven surface whereby the appearance is not good.

In a method where a filling agent is filled into a shell of a coating agent followed by freezing, there is a disadvantage that, when the coating agent contains solid substances such as sarcocarp, adzuki bean and nuts, sucking and circulation of unfrozen liquid are difficult and that the solid substances such as sarcocarp are enclosed inside whereby the product has no deluxe feel and its appealing is little.

The first object of the present invention is to offer a combined frozen dessert where the above-mentioned disadvantages are solved whereby there is no oily feel but is abundant in fresh feel and, as same as in the case where a coating agent of an oil base is used, the surface is flat and the finish of the appearance is beautiful. The second object of the present invention is to offer a combined frozen dessert where the coating state of the coating agent is good and the adhering state of the solid substances such as sarcocarp is also good.

Thus, the present invention relates to a combined frozen dessert where the frozen dessert which is a core is coated with a coating agent of an oil-in-water type wherein the said coating agent contains 30-80% by weight of water, 1-40% by weight of fat/oil and 0-15% by weight of solid not fat (SNF), contains saccharide and thickening polysaccharide as main ingredients and further contains 0.1-1% by weight of a hydrophilic sucrose fatty acid ester having an HLB of 9 or more.

The said coating agent contains 0.1-2% by weight of pullulan or α-starch and, as a result of joint use of pullulan or α-starch with other thickeners, viscosity during the dipping stage is adjusted to an extent of 1000-6000 CPS at 5°C.

The combined frozen dessert of the present invention is in such a structure that water and fat/oil are coated with an appropriately adjusted coating agent of an oil-in-water type. Therefore, like in the case of a coating agent of an oil base type, the surface is flat and finish of the appearance is beautiful while, unlike in the case of a coating agent of an oil base type, an oily feel is not noted giving a very fresh taste whereby low calorie in terms of nutrition can be achieved.

Further, the coating agent can be used in such a very appropriate amount that, for example, 10-20% by weight (1-2 mm in terms of thickness) of the product and, in addition, solid substances such as sarcocarp can be adhered in a good state whereby it is now possible to meet with the requirement of diversification of the taste.

Furthermore, as a result of an appropriate adjustment of physical property of the coating agent of an oil-in-water type, it is now possible to conduct a continuous production by a dipping method where the conventional manufacturing devices can be used as they are and, accordingly, there is an advantage that the productivity is improved whereby the combined dessert of the present invention can be offered in a low cost.

The ice bar which is a combined dessert according to the embodiments of the present invention is that a frozen dessert which is to be a core is dipped in a bath of a coating agent whereby the coating agent is coated on the surface of the frozen dessert.

The important point whether this ice bar can be continuously produced is the conditions for a drying or solidifying speed when the frozen dessert is dipped in a bath of the coating agent and also for its stable adhered amount are satisfied.

As a result of the experiment, it has been confirmed that the continuous production is possible when the following physical properties A-E of the coating agent of an oil-in-water type are appropriately adjusted.
A: content of the solid
B: type (physical property) and content of the fat/oil
C: type (physical property) and content of the saccharide
D: type and content of the sucrose fatty acid ester
E: effect of the thickening polysaccharide and pullulan or α-starch

Those properties will be discussed as hereunder
A: Content of the solid
   In a coating agent of an oil-in-water type, its solid content is 20-70% by weight (water content: 30-80% by weight) or, preferably, around 35% by weight (water content: around 65% by weight). When the amount of the solid except fat/oil is 70% by weight or more, the drying speed becomes slow whereby a continuous production is not possible. On the other hand, when the amount of the solid is 20% by weight or less, the adhering amount becomes small whereby taste is poor lacking in appeal. Incidentally, in the case of a coating agent of an oil base type, the solid content is usually 99% by weight or more (water content: less than 1% by weight).
B: Type and content of the fat/oil
   Depending upon the type (physical property) and content of the fat/oil, there is a considerably change in physical property (particularly, drying speed and adhering amount) of the coating agent.
   As to the fat/oil, it is appropriate to use a vegetable fat/oil such as coconut oil, palm oil, palm kernel oil or cotton seed oil and it is preferred that a hydrogenated oil is used together so that an ascending melting point is adjusted to 25-30°C. Although a coating is possible when the fat/oil content is 1-40% by weight, the amount of 10-20% by weight is appropriate in terms of the taste.
C: Type and content of the saccharide
   Saccharide is a main ingredient for constituting the body of the coating agent of an oil-in-water type and a sole use of sucrose or a joint use of it with starch syrup is preferred where the standard content is 10-20% by weight. When a monosaccharide such as glucose or fructose which is a cause of freezing-point depression is used, it hardly adheres to the core and the drying speed becomes slow as well resulting in a tendency of disturbing the continuous production. Accordingly, use of such a monosaccharide is to be avoided or to be in an amount of as small as not more than 5% by weight.
D: Type and content of the sucrose fatty acid ester
   It has been confirmed by experiments that, when sucrose fatty acid ester of a hydrophilic type having an HLB of 9 or more is used in 0.1-1% by weight or, preferably, that having an HLB of 11 is used in 0.3% by weight, stability of the coating agent is improved and changes of viscosity with a lapse of time in a storage tank or in a bath are effectively suppressed.
E: Effect of thickening polysaccharide and pullulan or α-starch
   As a result of the repeated experiments, viscosity of a coating agent has been found to be appropriate to adjust to 1000-6000 CPS at 5°C (using a B type viscometer; rotor No.3). In order to give viscosity, it is possible to utilize a commonly used thickener such as vegetable seed mucilage, marine algae extract, fruit mucilage, microbial mucilage, cellulose and derivatives thereof and a joint use of locust bean gum and tamarind gum is preferred.

The present inventors have found as a result of experiments that, when 0.1-2% by weight or, preferably, 0.15-0.5% by weight of pullulan (water-soluble type; average molecular weight: about 200,000) or α-starch is used together with the above-mentioned thickener, it is effective for improving the stability of the coating agent mix, for improving the adhering property of solid substance such as sarcocarp and for improving the taste as a result of giving body and savor feel. Incidentally, when the amount of pullulan or α-starch is less than 0.1% by weight, achievement of the above effect is difficult while, when it is more than 2% by weight, starch smell is generated resulting in a bad taste and fluidity becomes poor resulting in a bad coating whereby the production is hindered. Accordingly, the amount should be within a range of 0.1-2% by weight.

The above ice bar is manufactured, for example, as follows. First, manufacture of a coating agent is entirely as same as in the preparation of a mix for ice cream and, in keeping the cooling at 5°C after the preparation, the already-available aging vat can be utilized as it is.

The frozen dessert used as a core may be any of an ice cream type having an overrun of 0-80%, a sherbet type having an overrun of 0-50% and a chopped ice type having an overrun of 0-30% and it may be manufactured according to the conventional method.

The above core where its surface is cooled after detaching from a mold is dipped for 0.3-2 second(s) in a bath of the above coating agent adjusted to viscosity of 1000-6000 cps at 5°C so that a coating agent is adhered to the core and then its surface is cooled again whereby an ice bar is manufactured. At that time, the coating agent does not drip but dries quickly and, in addition, its adhering amount is stable whereby a continuous production is possible. Incidentally, in the manufacture, the already available biter line equipment can be used as it is.

As hereunder, examples of the present invention are illustrated. First, a frozen dessert to be used as a core was prepared by compounding the materials as shown in the following Table 1 followed by subjecting a conventional methods comprising the steps of homogenization, sterilization, quick cooling, aging, freezing, filling, solidification by freezing and detachment from a mold.

### [Table 1]

Then a coating agent of an oil-in-water type was prepared by compounding the materials shown in each of the following Table 2 and Table 3 according to the entirely same steps as in the case of the core.

### [Table 2 and Table 3]

After that, each of the coating agent mixes of the above-mentioned Examples 1-4 was held in an aging vat by cooling at 5°C and sent to a bath, the above core was dipped thereinto for 0.3-2 second(s) and its surface was cooled again whereby a continuous production of ice bar was carried out.

During the manufacturing process of the ice bar, changes of viscosity of each coating agent mix in Examples 1-4 with a lapse of time were checked and the result as shown in the following Table 4 was noted.

### [Table 4]

It is apparent from the results that, in each examples, change in viscosity with a lapse of time was found to rarely take place. This is believed to be due to the fact caused by addition of a hydrophilic sucrose fatty acid ester.

Further, when the adhering amount of the coating agent mix to the core and its drying speed in Examples 1-4 were tested for three times each, the result as shown in the following Table 5 was noted. Incidentally, the experiment was carried out using a 80-ml square mold under the conditions where temperature of the coating agent was 5°C and temperature of the core surface was -12°C.

### [Table 5]

It is apparent from the result that, in Examples 1-3 where pullulan or α-starch was used together with other thickener, both adhering amount and drying speed were stable while, in Example 4 where neither pullulan nor α-starch was used, the adhering amount was confirmed to be small.

Further, when the adhering amount of sarcocarp of strawberry in Examples 2-4 was checked for three times each, the result as shown in the following Table 6 was noted. Incidentally, this experiment was carried out using a 80-ml square mold under the conditions where temperature of the coating agent was 5°C and temperature of the core surface was -12°C.

### [Table 6]

It is apparent from the result that, in Examples 2 and 3 where pullulan or α-starch was used together with other thickener, the adhering amount of the sarcocarp was about two-fold as compared with Example 4 where neither pullulan nor α-starch was used.

**Table 1**

| 〈Compounding of Core Materials〉 | | | |
|---|---|---|---|
| Name of Material | Compounding Amount | Composition and Overrun | |
| Skim milk | 10.0% | | |
| Pure coconut oil | 8.0% | Total solid | 28.9% |
| Sugar | 8.0% | Solid not fat | 9.5% |
| Starch syrup | 4.0% | Vegetable fat | 8.0% |
| Emulsification stabilizer | 0.6% | | |
| Perfume | 0.1% | Overrun | 30% |
| Water | 69.3% | | |

**Table 2**

| 〈Compounding of Coating Agent (for the Taste of Ground Green Tea)〉 | | | |
|---|---|---|---|
| Name of Material | Example 1 | Composition and Viscosity | |
| Sugar | 14.0% | | |
| Powdery syrup | 4.0% | Total solid | 36.3% |
| Skim milk | 0.5% | Solid not fat | 0.4% |
| Pullulan | 0.3% | Vegetable fat | 15.0% |
| Locust bean gum | 0.15% | | |
| Tamarind gum | 0.4% | Viscosity | 3000 CPS (5°C) |
| Sucrose fatty acid ester | 0.3% | | |
| Palm oil | 7.0% | | |
| Hydrogenated coconut oil | 8.0% | | |
| Ground green tea powder | 2.0% | | |
| Ground green tea flavor | 0.1% | | |
| Water | 63.25% | | |

**Table 3**

| 〈Compounding of Coating Agent (Containing Strawberry Sarcocarp)〉 | | | | | |
|---|---|---|---|---|---|
| Name of Material | Examples | | | Composition and Viscosity | |
| | 2 | 3 | 4 | | |
| Sugar | 14.0% | 14.0% | 14.0% | | |
| Powdery syrup | 2.0% | 2.0% | 2.0% | Total solid | 34.2% |
| Skim milk | 0.5% | 0.5% | 0.5% | Solid not fat | 0.4% |
| Pullulan | 0.1% | | | Vegetable fat | 13.0% |
| α-Starch | | 0.1% | | Sarcocarp juice | 40.0% |
| Locust bean gum | 0.3% | 0.3% | 0.4% | | |
| Tamarind gum | 0.2% | 0.2% | 0.2% | Viscosity | 2400±100CPS(5°C) |
| Sucrose fatty acid ester | 0.3% | 0.3% | 0.3% | | |
| Palm oil | 5.0% | 5.0% | 5.0% | | |
| Hydrogenated coconut oil | 8.0% | 8.0% | 8.0% | | |
| Concentrated strawberry juice | 4.0% | 4.0% | 4.0% | | |
| Strawberry sarcocarp (10 | 20.0% | 20.0% | 20.0% | | |
| mm cut) | | | | | |
| Strawberry flavor | 0.1% | 0.1% | 0.1% | | |
| Water | 45.5% | 45.5% | 45.5% | | |

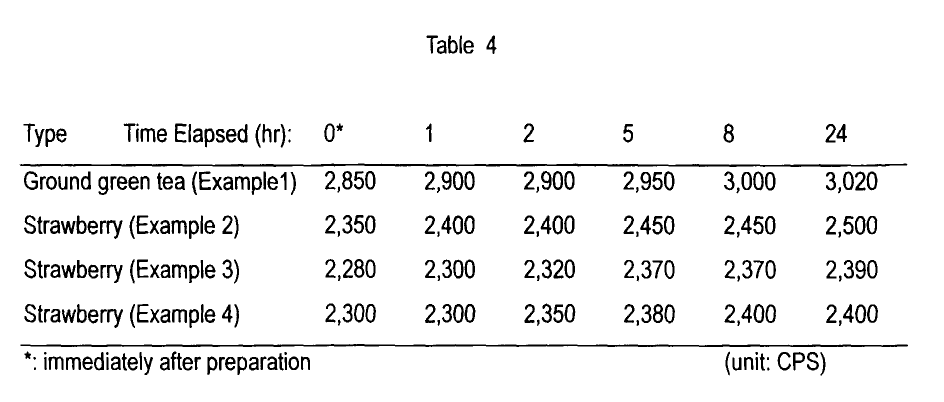

**Table 5**

| Examples | Test Run No. | Adhered Amount | | Drying Speed (seconds) |
|---|---|---|---|---|
| | | Weight (grams) | Thickness (mm) | |
| Ground green tea (Example 1) | I | 19.0 | 1.2-1.4 | 3.5-4.5 |
| | II | 19.0 | 1.2-1.4 | |
| | III | 19.1 | 1.2-1.4 | |
| Strawberry (Example 2) | I | 17.0 | 1.1-1.3 | 3.0-4.5 |
| | II | 17.3 | 1.1-1.3 | |
| | III | 17.2 | 1.1-1.3 | |
| Strawberry (Example 3) | I | 17.2 | 1.1-1.3 | 3.0-4.5 |
| | II | 17.4 | 1.1-1.3 | |
| | III | 17.8 | 1.1-1.3 | |
| Strawberry (Example 4) | I | 16.1 | 1.0-1.1 | 3.0-4.5 |
| | II | 15.0 | 0.9-1.0 | |
| | III | 13.6 | 0.8-1.0 | |

**Table 6**

| Examples | Test Run No. | Adhered Sarcocarp Amount (grams) |
|---|---|---|
| Strawberry (Example 2) | I | 4.2 |
| | II | 4.3 |
| | III | 4.8 |
| Strawberry (Example 3) | I | 4.0 |
| | II | 4.1 |
| | III | 4.0 |
| Strawberry (Example 4) | I | 1.8 |
| | II | 2.0 |
| | III | 1.9 |

## Claims

1. A frozen food comprising a first past and an oil-in-water coating therefor, the coating comprising 30-80% by weight of water, 1-40% by weight of fat and/or oil, 0-15% by weight of non-fat solid and 0.1-1% by weight of a hydrophilic sucrose fatty acid ester having an HLB of 9 or more.

2. A food according to claim 1, in which the coating additionally comprises a polysaccharide as a thickening agent.

3. A frozen food according to claim 1 or 2, wherein the coating additionally comprises 0.1-2% by weight of pullalan or α-starch such that the viscosity of the coating is 1000-6000 CPS at 5°C.

4. A food according to any preceding claim, in which the coating additionally comprises a saccharide as a body component thereof.

5. A food according to any preceding claim, in which the first part comprises a core thereof substantially surrounded by the coating.

6. A food according to any preceding claim, in which the coating is provided on the first part by dipping the first part in a coating composition.
